# EUROPÄISCHE PATENTSCHRIFT

(11) **EP 3 421 844 B1**
(45) Veröffentlichungstag und Bekanntmachung des Hinweises auf die Patenterteilung: **26.08.2020**
(21) Anmeldenummer: 17179080.1
(22) Anmeldetag: 30.06.2017
(51) Int. Cl.: F16H 57/08, B02C 15/00

(54) **PLANETENRADTRÄGERANORDNUNG, VERTIKALMÜHLENGETRIEBE UND VERTIKALMÜHLE**
PLANETARY GEARING CARRIER ASSEMBLY, VERTICAL MILL GEAR AND VERTICAL MILL
SYSTÈME DE SUPPORT DE ROUE SATELLITE, ENGRENAGE DE BROYEUR VERTICAL ET BROYEUR VERTICAL

(43) Veröffentlichungstag der Anmeldung: 02.01.2019
(73) Patentinhaber: Flender GmbH, 46395 Bocholt (DE)
(72) Erfinder: Becka, Simon, 45128 Essen (DE); Brun, Steffen, 46325 Borken (DE); Friedrich, Matthias, 46395 Bocholt (DE); Josten, Guido, 46395 Bocholt (DE); Messink, Christoph, 46399 Bocholt (DE); Prusak, Robert, 45891 Gelsenkirchen (DE); Schlegel, Eugen, 46117 Oberhausen (DE); Schmeink, Franz, 46395 Bocholt (DE); Schroer, Dirk, 46414 Rhede (DE); Tegelkamp, Michael, 46399 Bocholt (DE)
(74) Vertreter: Maier, Daniel Oliver

(56) Entgegenhaltungen:
- EP-A1- 2 816 246
- DE-A1-102010 028 028
- DE-A1-102013 212 464
- US-A- 5 616 098

## Beschreibung

Planetenradträgeranordnung, Vertikalmühlengetriebe und Vertikalmühle

Die Erfindung betrifft eine Planetenradträgeranordnung, die zu einer Planetenstufe in einem Getriebe gehört. Die Erfindung betrifft auch ein Vertikalmühlengetriebe, in dem die erfindungsgemäße Planetenradträgeranordnung eingesetzt wird. Gleichermaßen betrifft die Erfindung eine Vertikalmühle, die mit einem solchen Vertikalmühlengetriebe ausgestattet ist.

Aus DE 10 2013 212 464 A1 ist ein Planetengetriebe bekannt, das zwei Planetenstufen aufweist und in einem Vertikalmühlengetriebe eingesetzt wird. Ein Planetenradträger einer Planetenstufe ist dabei hängend an einem Rohr gefestigt, das an einem Ende in einem Wälzlager gelagert ist.

Die Druckschrift EP 2 816 246 A1 offenbart eine Lagerung einer Welle, die zwei Wälzlager umfasst. Die Wälzlager sind als Kegelrollenlager ausgebildet und in einer X-Anordnung angebracht. Zwischen den beiden Kegelrollenlagern ist ein Zwischenring angeordnet. Die Lagerung ist insgesamt dazu ausgebildet, einen erhöhten Verschleiß, insbesondere durch Reibungskorrosion, zu verhindern.

Ein Nachteil bei bekannten Planetenradträgeranordnungen besteht darin, dass diese einem erhöhten Verschleiß unterliegen. Ferner besteht Bedarf an einer Planetenradanordnung, die im Betrieb pendelfähig, also radial beweglich, ist. Der Erfindung liegt die Aufgabenstellung zugrunde, eine geeignete Planetenradträgeranordnung bereitzustellen, die zumindest den skizzierten Nachteil aus dem Stand der Technik überwindet.

Die Aufgabenstellung wird durch die erfindungsgemäße Planetenradträgeranordnung gelöst. Die Planetenradträgeranordnung gehört zu einer Planetenstufe, die als Komponente eines Getriebes ausgebildet ist. Die Planetenradträgeranordnung umfasst einen Planetenradträger, der um eine Hauptdrehachse drehbar ist und in dem zumindest ein Planetenrad aufgenommen ist. Der Planetenradträger ist über ein Zugelement an einem Gehäuse des Getriebes aufgehängt. Dazu ist das Zugelement an einem zweiten Ende mit dem Planetenradträger verbunden. Das entgegengesetzte erste Ende des Zugelements ist pendelfähig in einer Lagerung aufgenommen. Das Zugelement ist dabei im Wesentlichen als Stab oder Rohr ausgebildet und hinreichend fest um die Gewichtskraft des Planetenradträgers aufzunehmen. Unter einer Pendelfähigkeit des Zugelements ist zu verstehen, dass eine Radialkraft, die auf das erste Ende des Zugelements einwirkt, zu einer Radialauslenkung des Zugelements führt, wobei die im Zugelement eintretenden Biegebeanspruchungen im Wesentlichen vernachlässigbar sind. Die Lagerung weist mindestens ein erstes und ein zweites Wälzlager auf, in denen das Zugelement aufgenommen ist.

In der beanspruchten Planetenradträgeranordnung ist mindestens eines der Wälzlager in der Lagerung zur Aufnahme einer Axialkraft ausgebildet, die den Planetenradträger anhebt. Dies wird durch die Wahl des Lagertyps und/oder die Ausrichtung des mindestens einen Wälzlagers gewährleistet. Indem eines der Wälzlager dazu ausgebildet ist, eine den Planetenradträger anhebende Axialkraft aufzunehmen, wird vermieden, dass das jeweils andere Wälzlager abhebt, also der beidseitige Kontakt zwischen dessen Wälzkörpern und dem zugehörigen Außen- und Innenring, vorübergehend aufgehoben wird. Hierdurch werden ein zwischenzeitliches Trennen eines Wälzlagers und das darauffolgende Anschlagen von Außen-, Innenring und Wälzkörpern vermieden. Dadurch wird ein übermäßiger Verschleiß an den Wälzlagern vermieden, was zu einer erhöhten Zuverlässigkeit und Lebensdauer der Planetenträgeranordnung führt.

In einer bevorzugten Ausführungsform der beanspruchten Planetenradträgeranordnung sind das erste und zweite Wälzlager in einer X-Anordnung angeordnet. Unter einer X-Anordnung ist hierbei eine gegenseitige Ausrichtung der Wälzlager zu verstehen, bei der die Drehmittelpunkte, die sich aus der Ausrichtung der Wälzkörper ergeben, auf einander zugewandten Seiten der Wälzlager liegen. Infolge der X-Anordnung ist das zweite Wälzlager, das oberhalb des ersten Wälzlagers angeordnet ist, dazu ausgebildet, die anhebende Axialkraft auf den Planetenradträger aufzunehmen. Die anhebende Axialkraft führt somit zu einer Druckbeanspruchung der Wälzkörper im zweiten Wälzlager, so dass ein vorübergehendes Abheben, also Auftrennen, des Innen-, Außenrings und der Wälzkörper im ersten Wälzlager verhindert werden. Durch die X-Anordnung der Wälzlager wird ein besonderes Maß an Stabilität entlang der Hauptdrehachse des Planetenradträgers erzielt und übermäßige Beanspruchungen der Wälzlager unterbunden.

Ferner können das erste und zweite Wälzlager derart angeordnet sein, dass die Drehmittelpunkte der beiden Lager koinzidieren, also in einem gemeinsamen Punk zusammenfallen. Hierdurch wird ein Pendelpunkt gebildet, um den das Zugelement radial pendelfähig ist. Eine Pendelbewegung des Zugelements führt dabei zu einer geringen bis vernachlässigbaren Biegebeanspruchung des Zugelements. Damit kann ist der Planetenradträger bezogen auf seine Hauptdrehachse radial beweglich. Der somit pendelfähige Planetenradträger ist dazu geeignet, im Zusammenspiel mit den darin aufgenommenen Planetenrädern eine Ausrichtung einzunehmen, in der ein vorteilhaftes, statisch bestimmtes Kräftegleichgewicht vorliegt. Dadurch wird ein verringerter Verschleiß der Planetenräder, deren Lagerungen im Planetenradträger und im Planetenradträger selbst erreicht. Insbesondere wird eine selbsttätige optimale Ausrichtung des Planetenradträgers in seiner Planetenstufe erzielt, in der auch eine reduzierte Geräuschentwicklung vorliegt.

In einer weiteren bevorzugten Ausführungsform der beanspruchten Planetenradträgeranordnung sind die Wälzlager in Axialrichtung, also entlang der Hauptdrehachse, gegeneinander vorgespannt. Die Vorspannung gewährleistet, dass in jedem Betriebszustand die Wälzlager an ihrem bestimmungsgemäßen Einbauort gehalten werden, so dass ein Auftrennen der Wälzlager verhindert wird. Verschleißintensive Beanspruchungen der Wälzlager werden verhindert. Die Vorspannung wird vorzugsweise über ein Vorspannelement hergestellt, das zwischen dem zweiten Wälzlager und einer Gehäusekomponente, bevorzugt einem Deckel, angeordnet ist. Das Vorspannelement ist dabei vorzugsweise koaxial auf dem Zugelement aufgenommen und auch im Wesentlichen röhrenförmig. Das Vorspannelement stützt sich im eingebauten Zustand auf einer Seite auf dem zweiten Wälzlager ab und drückt am entgegengesetzten Ende gegen die Gehäusekomponente. Die Gehäusekomponente ist lösbar mit dem Gehäuse eines Getriebes verbunden, in dem die beanspruchte Planetenradträgeranordnung eingesetzt wird. Durch die Montage der Gehäusekomponente ist somit ein definierter Vorspannungszustand zwischen den Wälzlagern herstellbar.

Des Weiteren kann die beanspruchte Planetenradträgeranordnung eine Distanzhülse umfassen, die zwischen dem ersten und zweiten Wälzlager angeordnet ist. Die Distanzhülse ist durch ihre entsprechende Länge in Axialrichtung dazu ausgebildet, einen definierten Axialabstand zwischen den Wälzlagern einzustellen. Distanzhülsen sind mit hoher Präzision herstellbar und bieten eine einfache Möglichkeit, beispielsweise die Lage der Drehmittelpunkte der Wälzlager zueinander exakt einzustellen. Hierdurch ist die Lage des gemeinsamen Pendelpunkts des Zugelements in einfacher Weise einstellbar. Dies gewährleistet eine hohe Pendelfähigkeit der beanspruchten Planetenradträgeranordnung, die wiederum einen vorteilhaften Betrieb des zugehörigen Getriebes erlaubt.

In einer bevorzugten Ausführungsform der Planetenradträgeranordnung sind die Wälzlager in einer einstückigen Buchse aufgenommen. Die einstückige Buchse kann dabei integral mit dem Gehäuse des Getriebes ausgebildet sein, in dem die Planetenradträgeranordnung verwendet wird. Eine solche einstückige Buchse kann beispielsweise durch Überarbeiten eines Gussbauteils in einem Fräs- oder Drehvorgang mit hoher Fertigungspräzision hergestellt werden. Eine einstückige Buchse erlaubt ferner eine einfache und schnelle Montage der Wälzlager. Darüber hinaus kann in der beanspruchten Planetenradträgeranordnung mindestens eines der Wälzlager als Axialpendelrollenlager, als Kegelrollenlager oder als Axialrillenkugellager ausgebildet sein. Bei derartigen Wälzlagern liegt der Drehmittelpunkt außerhalb des Wälzlagers, so dass eine X-Anordnung mit gemeinsamem Pendelpunkt herstellbar ist. Derartige Wälzlager bieten auch ein hohes Maß an Beanspruchbarkeit in Axialrichtung und bieten damit ein hohes Maß an Zuverlässigkeit und eine hohe Lebensdauer für die Planetenradträgeranordnung. Darüber hinaus sind die skizzierten Wälzlager kosteneffizient. Weiter alternativ kann jeder Wälzlagertyp eingesetzt werden, der die oben beschriebenen technischen Eigenschaften aufweist. In der beanspruchten Planetenradträgeranordnung kann auch eine Kombination unterschiedlicher Wälzlagertypen eingesetzt werden. Beispielsweise kann als erstes Wälzlager ein Wälzlagertyp gewählt werden, der eine hoher Dauerbetriebsfestigkeit aufweist, während als zweites Wälzlager ein Wälzlagertyp eingesetzt wird, der dazu ausgebildet ist, in Axialrichtung erhöhte Stoßbeanspruchungen aufzunehmen.

In einer weiteren Ausführungsform des beanspruchten Planetenradträgers ist das Zugelement als Hohlwelle oder als Vollwelle ausgebildet. Im als Hohlwelle ausgebildeten Zugelement ist unmittelbar oder über zusätzliche Leitungen ein Betriebsfluid, beispielsweise ein Schmieröl, transportierbar. Dies bietet ein hohes Maß an räumlicher Integration unterschiedlicher Funktionen.

Die skizzierte Aufgabenstellung wird auch durch das erfindungsgemäße Vertikalmühlengetriebe gelöst. Das Vertikalmühlengetriebe umfasst ein Gehäuse, in dem zumindest eine erste Planetenstufe aufgenommen ist, die mit einer Kegelradstufe gekoppelt ist. Die Kegelradstufe wiederum ist mit einem Antrieb verbunden. Die erste Planetenstufe umfasst einen Planetenradträger und ist mittels eines Zugelements am Gehäuse hängend befestigt. Dabei sind die Hauptdrehachse des Planetenradträgers und das Zugelement im Wesentlichen koaxial angeordnet. Das Zugelement ist an einem ersten Ende mit dem Planetenradträger verbunden und an einem entgegengesetzten zweiten Ende am Gehäuse des Vertikalmühlengetriebes derart gelagert, dass der Planetenradträger im Wesentlichen pendelfähig ist, also radial auslenkbar ist. Im erfindungsgemäßen Vertikalmühlengetriebe gehören das Zugelement und der Planetenradträger zu einer Planetenradträgeranordnung gemäß einer der oben skizzierten Ausführungsformen ausgebildet. Ein Vertikalmühlengetriebe mit einer solchen Planetenradträgeranordnung ist dazu geeignet, im laufenden Betrieb Axialkräfte aufzunehmen, die im montierten Zustand der Gewichtskraft des Planetenradträgers entgegengesetzt sind. Solche Axialkräfte werden beispielsweise durch Betriebsunregelmäßigkeiten oder durch Transporthandhabungen hervorgerufen. Das Abheben, also vorübergehende Auftrennen eines Wälzlagers, in dem das Zugelement aufgenommen ist, wird durch eine erfindungsgemäße Planetenstufenanordnung verhindert. Infolgedessen weist ein erfindungsgemäßes Vertikalmühlengetriebe einen verringerten Verschleiß, erhöhte Zuverlässigkeit und verlängerte Wartungsintervalle auf. Ebenso wird ein vereinfachter Transport sichergestellt, da zusätzliche Transportsicherungsmaßnahmen zur axialen Arretierung des Zugelements entbehrlich sind. Hierdurch wird insgesamt die Inbetriebnahme einer Vertikalmühle vereinfacht, die mit dem erfindungsgemäßen Vertikalmühlengetriebe ausgestattet sind.

Im beanspruchten Vertikalmühlengetriebe kann eine zweite Planetenstufe angeordnet sein, die mit der ersten Planetenstufe verbunden ist. Dabei ist die Antriebsseite der zweiten Planetenstufe mit der Abtriebsseite der ersten Planetenstufe gekoppelt. Besonders bevorzugt dient eine mit mit dem ersten Planetenradträger verbundende Welle als Sonnenradwelle. Die Sonnenradwelle die in der zweiten Planetenradwelle als Eingangswelle. Abtriebsseitig ist die zweite Planetenstufe mit einem Mahlteller verbunden, der über das Vertikalmühlengetriebe angetrieben wird. Folglich ist das Zugelement, an dem der Planetenradträger der ersten Planetenstufe befestigt ist, im Wesentlichen von den Komponenten der zweiten Planetenstufe umgeben. Ein solches zweistufiges Vertikalmühlengetriebe bietet ein besonders bevorzugtes Untersetzungsverhältnis und ein hohes Maß an Zuverlässigkeit. Insbesondere erlaubt es die erfindungsgemäße Planetenradträgeranordnung, auch bei Getrieben mit mehreren Planetenstufen, die erste Planetenstufe pendelfähig zu befestigen und gleichzeitig kompakt mit der zweiten Planetenradstufe kombiniert anzuordnen.

Ferner kann im beanspruchten Vertikalmühlengetriebe zwischen der Kegelradstufe und der Planetenstufe, die mit der Kegelradstufe im Eingriff steht, eine Torsionswelle angeordnet sein. Dies kann, je nach Bauform des Vertikalmühlengetriebes, die erste oder zweite Planetenstufe sein. Die Torsionswelle ist zur Drehmomentübertrag von der Kegelradstufe zur entsprechenden Planetenstufe ausgebildet und pendelfähig gelagert. Die Pendelfähigkeit umfasst, dass das Ende der Torsionswelle, das mit der Planetenstufe im Eingriff steht, bezogen auf deren Hauptdrehachse, radial beweglich ist. Die Torsionswelle ist dabei als Torsionswelle gemäß der bisher unveröffentlichten Europäischen Patentanmeldung mit dem Aktenzeichen EP 17176001.0 ausgebildet. Der Offenbarungsgehalt von EP 17176001.0 wird durch Verweisung explizit in die vorliegende Patentanmeldung mit einbezogen. Durch die Pendelfähigkeit des Planetenradträgers der ersten Planetenstufe und der Torsionswelle ist ein Spiel in den einzelnen Verzahnungen in der ersten Planetenstufe nutzbar. Im Betrieb des Vertikalmühlengetriebes ist in der ersten Planetenstufe stets ein statisch bestimmter Zustand einstellbar. Statisch überbestimmte Zustände, die mit mechanischen Zwängungen einhergehen, werden somit vermieden. Dies erlaubt einen verschleiß- und geräuscharmen Betrieb des Vertikalmühlengetriebes.

Die beschriebene Aufgabenstellung wird ebenso durch die erfindungsgemäße Vertikalmühle gelöst. Die Vertikalmühle umfasst einen Antriebsmotor, der dazu ausgebildet ist, einen Mahlteller der Vertikalmühle anzutreiben. Zwischen dem Antriebsmotor und dem Mahlteller ist ein Vertikalmühlengetriebe angeordnet, dass die Drehzahl des Antriebsmotors reduziert und das auf dem Mahlteller ausgeübte Drehmoment erhöht. Das Vertikalmühlengetriebe ist hierbei gemäß einer der oben skizzierten Ausführungsformen ausgebildet. Bei einer Vertikalmühle werden die technischen Vorteile des beschriebenen Vertikalmühlengetriebes in besonderem Ausmaß verwirklicht.

Die Erfindung wird im Folgenden anhand von Figuren einzelner Ausführungsformen beschrieben. Die Merkmale der Figuren sind dabei ohne Weiteres untereinander und Merkmalen aus der Beschreibung kombinierbar. Es zeigt im Einzelnen:
- FIG 1: schematisch den Aufbau einer Ausführungsform des erfindungsgemäßen Vertikalmühlengetriebes;
- FIG 2: eine Ausführungsform der erfindungsgemäßen Planetenradanordnung im Längsschnitt;
- FIG 3: schematisch den Aufbau einer Vertikalmühle, die mit dem erfindungsgemäßen Vertikalmühlengetriebe ausgestattet ist.

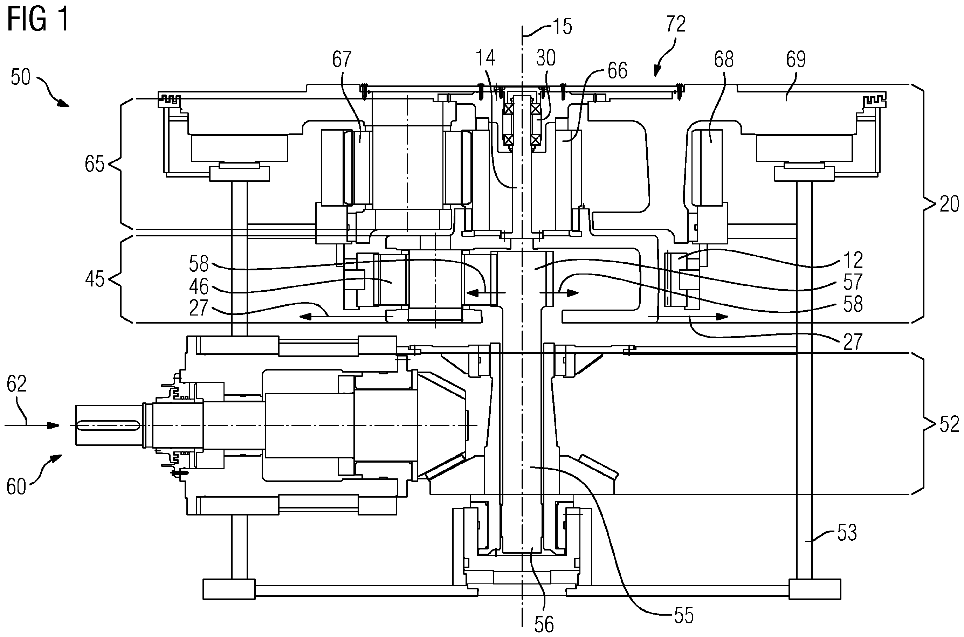

FIG 1 zeigt den Aufbau eines erfindungsgemäßen Vertikalmühlengetriebes 50, die ein Gehäuse 53 umfasst und dem über einen nicht näher dargestellten Antriebsmotor 60 Antriebsleistung 62 zur Verfügung gestellt wird. Die Antriebsleistung 62 wird über eine Kegelradstufe 52 in eine vertikale Richtung umgelenkt. Die Kegelradstufe 52 weist eine Torsionswelle 55 auf, die im Bereich eines ersten Endes 56 pendelfähig gelagert ist. Dadurch ist ein zweites Ende 57 der Torsionswelle 55, bezogen auf eine Hauptdrehachse 15, im Betrieb des Vertikalmühlengetriebes 50 radial auslenkbar. Entsprechende radiale Auslenkungen sind in FIG 1 durch die Pfeil 58 dargestellt. Das zweite Ende 57 der Torsionswelle 55 kämmt mit einem Planetenrad 46 einer ersten Planetenstufe 45. Das Planetenrad 46 steht im Eingriff mit einem Hohlrad 12 der ersten Planetenstufe 45 und ist drehbar in einem Planetenradträger 10 der ersten Planetenradstufe 45 aufgenommen. Eine Sonnenradwelle 66 einer zweiten Planetenstufe 65 ist drehfest mit dem Planetenradträger 10 der ersten Planetenstufe 45 verbunden und kämmt mit einem Planetenrad 67 der zweiten Planetenstufe 65. Das Planetenrad 67 der zweiten Planetenstufe 65 wiederum steht im Eingriff mit einem Hohlrad 68 der zweiten Planetenstufe 65 und ist dazu ausgebildet, im Betrieb des Vertikalmühlengetriebes 50 den Planetenradträger 69 der zweiten Planetenstufe 65 z drehen. Der Planetenradträger 69 wiederum dient zum Antrieb eines nicht näher dargestellten Mahltellers 70.

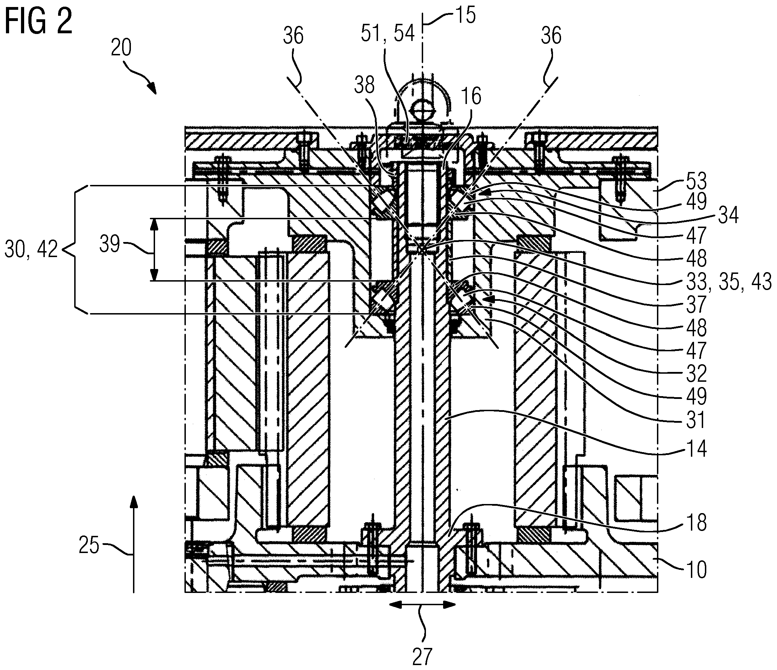

Der Planetenradträger 10 der ersten Planetenstufe 45 gehört zu einer Planetenradträgeranordnung 20, die ein Zugelement 14 umfasst, an dem der Planetenradträger 10 der ersten Planetenstufe 45 hängend und pendelfähig gelagert ist. Die Pendelfähigkeit des Planetenradträgers 10 der ersten Planetenstufe 45 erlaubt eine radiale Auslenkung, die durch die Pfeile 27 abgebildet ist. Durch die Pendelfähigkeit des Planetenradträgers 10 der ersten Planetenstufe 45 ist der Pendelfähigkeit der Torsionswelle 55 stellt sich für die Planetenstufen 45, 65 insgesamt, bezogen auf die Hauptdrehachse 15, eine radiale Beweglichkeit ein. Diese erlaubt es, dass sich für das Planetenrad 46 der ersten Planetenstufe 45 und/oder das Planetenrad 67 der zweiten Planetenstufe 65 im Betrieb stets ein statisch bestimmter Zustand einstellt. Ein statisch bestimmter Zustand bietet eine vorteilhafte mechanische Beanspruchung der beteiligten Komponenten und ein hohes Maß an Laufruhe. Die Planetenradträgeranordnung 20 wird im Folgenden exemplarisch anhand der Ausführungsform gemäß FIG 2 näher beschrieben.

FIG 2 zeigt im Längsschnitt eine Ausführungsform der beanspruchten Planetenradträgeranordnung 20, die beispielsweise in einem Vertikalmühlengetriebe 50 wie in FIG 1 einsetzbar ist. FIG 1 und FIG 2 sind im Rahmen des fachmännischen Grundwissens in gegenseitiger Ergänzung aufzufassen. Gleiche Bezugszeichen haben in FIG 1 und FIG 2 demnach auch die gleiche technische Bedeutung.

Die Planetenradträgeranordnung 20 umfasst einen Planetenradträger 10, der um eine Hauptdrehachse 15 drehbar gelagert ist. Ferner umfasst der Planetenradträger 10 ein Zugelement 14, das als Hohlwelle ausgebildet ist und koaxial zur Hauptdrehachse 15 angeordnet ist. Das Zugelement 14 ist an einem ersten Ende 14 in einer Lagerung 30 aufgenommen und an einem zweiten Ende 18 drehfest mit dem Planetenradträger 10 verbunden, so dass eine Drehbewegung des Planetenradträgers 10 auf das Zugelement 14 übertragen wird. Die Lagerung 30 umfasst ein erstes und ein zweites Wälzlager 32, 34, die jeweils als Axialpendelrollenlager ausgebildet sind. Das erste und zweite Wälzlager 32, 34 sind in einer einstückigen Buchse 31 aufgenommen, die mit dem Gehäuse 53 verbunden ist. Die Wälzlager 32, 34 weisen zueinander einen Axialabstand 39 auf, der durch eine Distanzbuchse 37 eingestellt ist, die zwischen den Wälzlagern 32, 34 angeordnet ist. Ferner sind die Ausrichtungen der Wälzlager 32, 34 derart gewählt, dass die Wälzlager 32, 34 sich in einer sogenannten X-Anordnung 42 befinden. Am zweiten Wälzlager 34 ist ein Vorspannelement 38 angeordnet, durch das beide Wälzlager 32, 34 in axialer Richtung vorgespannt sind. Das Vorspannelement 38, das im Wesentlichen als Hülse oder Buchse ausgebildet ist, stützt sich dazu am zweiten Wälzlager 34 und an einer lösbar befestigten Gehäusekomponente 54 ab, die als Deckel 51 ausgebildet ist.

In der X-Anordnung 42 der Wälzlager 32, 34 ist das zweite Wälzlager 34 so angeordnet, dass dieses dazu geeignet ist, eine Axialkraft 25 aufzunehmen, die zu einem Anheben des Planetenradträgers 10 ausgerichtet ist. Eine solche Axialkraft 25 kann durch eine Unregelmäßigkeit im Betrieb der Planetenradträgeranordnung 20 oder eine Transporthandhabung hervorgerufen werden. Die Axialkraft 25 ruft dabei eine axiale Druckbeanspruchung des zweiten Wälzlagers 34 hervor. Im Zusammenwirken mit der Vorspannung, die über das Vorspannelement 38 ausgeübt wird, wird einem Abheben, also einem Auftrennen des ersten Wälzlagers 32 entgegengewirkt. Ein solches Abheben des ersten Wälzlagers 32 geht mit einem erhöhten Verschleiß einher. Jedes der Wälzlager 32, 34 weist einen Drehmittelpunkt 33, 35 auf. Die Lage der Drehmittelpunkte 33, 35 ergibt sich aus der Ausrichtung der Wälzkörper 47, die jeweils zwischen einem Innenring 48 und einem Außenring 49 der Wälzlager 32, 34. Die Lager der Drehmittelpunkte 33, 35 ergibt sich konstruktive anhand von Hilfslinien 36. In der X-Anordnung 42 ist der Axialabstand 39 der Wälzlager 32, 34 derart eingestellt, dass die Drehmittelpunkte 33, 35 koinzidieren, also in einen gemeinsamen Punkt zusammenfallen. Dieser gemeinsame Punkt bildet einen Pendelpunkt 43. Infolgedessen ist das Zugelement 14 um den Pendelpunkt 43 pendelfähig, was eine radiale Auslenkung 27 des Zugelements 14 im Betrieb der Planetenradträgeranordnung 20 erlaubt. Die Planetenradträgeranordnung 20 gemäß FIG 2 vermeidet somit übermäßigen Verschleiß am ersten Wälzlager 32 und bietet gleichzeitig eine Pendelfähigkeit des Planetenradträgers 20. Im Zusammenwirken mit einer Pendelfähigkeit der Torsionswelle 55 gemäß FIG 1 ist dadurch ein selbsttätiges gegenseitiges Ausrichten der Planetenstufen 45, 65 möglich, was wiederum zu einem bevorzugten statischen Beanspruchungszustand deren Komponenten führt.

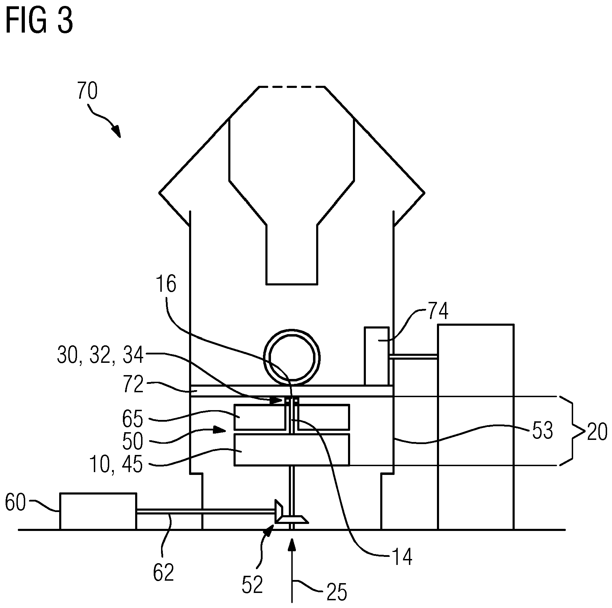

In FIG 3 ist schematisch der Aufbau einer Vertikalmühle 70 dargestellt, die einen Antriebsmotor 60 umfasst, über den die für den Betrieb notwendige Antriebsleistung 62 bereitgestellt wird. Der Antriebsmotor 60 ist mit einem Vertikalmühlengetriebe 50 gekoppelt, das eine Kegelradstufe 52 und mindestens eine erste Planetenstufe 45 umfasst. Durch den Antriebsmotor 60 wird ein Mahlteller 72 angetrieben, über dessen Oberfläche Mahlwälzkörper 74 laufen. Zur ersten Planetenstufe 45 gehört ein Planetenradträger 10. Der Planetenradträger 10 der ersten Planetenstufe 45 ist über ein Zugelement 14 mit dem Gehäuse 53 des Vertikalmühlengetriebes 53 verbunden und so hängend gelagert. Der Planetenradträger 10 gehört zu einer Planetenradträgeranordnung 20, die gemäß einer Ausführungsform der Erfindung ausgebildet ist. Dabei weist ist das Zugelement 14 an einem ersten Ende 16, das dem Planetenradträger 10 abgewandten ist, drehbar in einer Lagerung 30 aufgenommen, die zwei Wälzlager 32, 34 umfasst, die derart angeordnet sind, dass zumindest eines der Wälzlager 32, 34 dazu geeignet ist, eine Axialkraft 25 aufzunehmen, die zu einem Anheben des Planetenradträgers 10 ausgerichtet ist.

## Patentansprüche

1. Planetenradträgeranordnung (20), umfassend einen Planetenradträger (10), der hängend an einem ersten Ende eines Zugelements (14) angebracht ist, wobei das Zugelement (14) an einem ersten Ende (16) pendelfähig in einer Lagerung (30) aufgenommen ist, **dadurch gekennzeichnet, dass** die Lagerung (30) mindestens ein erstes und ein zweites Wälzlager (32, 34) aufweist, wobei eines der Wälzlager (32, 34) dazu ausgebildet ist, eine den Planetenradträger (10) anhebende Axialkraft (25) aufzunehmen.

2. Planetenradträgeranordnung (20) nach Anspruch 1, **dadurch gekennzeichnet, dass** das erste und zweite Wälzlager (32, 34) in einer X-Anordnung (42) angeordnet sind.

3. Planetenradträgeranordnung (20) nach Anspruch 1 oder 2, **dadurch gekennzeichnet, dass** die Drehmittelpunkte (33, 35) der Wälzlager (32, 34) in einem gemeinsamen Pendelpunkt (43) liegen.

4. Planetenradträgeranordnung (20) nach einem der Ansprüche 1 bis 3, **dadurch gekennzeichnet, dass** die Wälzlager (32, 34) gegeneinander vorgespannt ist.

5. Planetenradträgeranordnung (20) nach Anspruch 4, **dadurch gekennzeichnet, dass** die Wälzlager (32, 34) mittels eines Vorspannelements (38) vorgespannt sind, das durch eine Gehäusekomponente (54), insbesondere einen Deckel (51), angedrückt wird.

6. Planetenradträgeranordnung (20) nach einem der Ansprüche 1 bis 5, **dadurch gekennzeichnet, dass** zwischen dem ersten und zweiten Wälzlager (32, 34) eine Distanzhülse (37) angeordnet ist.

7. Planetenradträgeranordnung (20) nach einem der Ansprüche 1 bis 6, **dadurch gekennzeichnet, dass** die Wälzlager (32 ,34) in einer einstückigen Buchse (31) aufgenommen sind.

8. Planetenradträgeranordnung (20) nach einem der Ansprüche 1 bis 6, **dadurch gekennzeichnet, dass** mindestens eines der Wälzlager (32, 34) als Axialpendelrollenlager, als Kegelrollenlager oder als Axialrillenkugellager ausgebildet ist.

9. Planetenradträgeranordnung (20) nach einem der Ansprüche 1 bis 7, **dadurch gekennzeichnet, dass** das Zugelement (14) als Vollwelle oder Hohlwelle ausgebildet ist.

10. Vertikalmühlengetriebe (50), umfassend ein Gehäuse (53) und zumindest eine erste Planetenstufe (45), die mit einer Kegelradstufe (52) verbunden ist, wobei ein Planetenradträger (10) der ersten Planetenstufe (45) über ein Zugelement (14) am Gehäuse (53) befestigt ist, **dadurch gekennzeichnet, dass** der Planetenradträger (10) mittels einer Planetenradträgeranordnung (20) nach einem der Ansprüche 1 bis 9 am Gehäuse (53) angeordnet ist.

11. Vertikalmühlengetriebe (50) nach Anspruch 10, **dadurch gekennzeichnet, dass** das Vertikalmühlengetriebe (50) eine zweite Planetenstufe (65) aufweist, die mit der ersten Planetenstufe (45) gekoppelt ist und zum Antrieb eines Mahltellers (72) einer Vertikalmühle (70) ausgebildet ist.

12. Vertikalmühlengetriebe (50) nach Anspruch 10 oder 11, **dadurch gekennzeichnet, dass** zwischen der Kegelradstufe (52) und der ersten oder zweiten Planetenstufe (45, 65) zur Drehmomentübertragung eine pendelfähig gelagerte Torsionswelle (55) angeordnet ist.

13. Vertikalmühle (70), umfassend einen Antriebsmotor (60), der zum Antrieb eines Mahltellers (72) mit einem Vertikalmühlengetriebe (50) verbunden ist, **dadurch gekennzeichnet, dass** das Vertikalmühlengetriebe (50) nach einem der Ansprüche 10 oder 11 ausgebildet ist.

## Claims

1. Planet carrier arrangement (20), comprising a planet carrier (10) mounted in a suspended manner on a first end of a traction element (14), wherein the traction element (14) is accommodated at a first end (16) in a bearing assembly (30) in a manner enabling it to oscillate, **characterised in that** the bearing assembly (30) has at least one first and one second roller bearing (32, 34), wherein one of the roller bearings (32, 34) is designed to absorb an axial force (25) lifting the planet carrier (10).

2. Planet carrier arrangement (20) according to claim 1, **characterised in that** the first and second roller bearings (32, 34) are disposed in an X-arrangement (42).

3. Planet carrier arrangement (20) according to claim 1 or 2, **characterised in that** the rotation centres (33, 35) of the roller bearings (32, 34) lie at a common centring point (43).

4. Planet carrier arrangement (20) according to one of claims 1 to 3, **characterised in that** the roller bearings (32, 34) are pretensioned against one another.

5. Planet carrier arrangement (20) according to claim 4, **characterised in that** the roller bearings (32, 34) are pretensioned by means of a pretensioning element (38) which is pressed against by a casing component (54), in particular a cover (51).

6. Planet carrier arrangement (20) according to one of claims 1 to 5, **characterised in that** a spacer sleeve (37) is disposed between the first and second roller bearing (32, 34).

7. Planet carrier arrangement (20) according to one of claims 1 to 6, **characterised in that** the roller bearings (32, 34) are accommodated in a one-piece bushing (31).

8. Planet carrier arrangement (20) according to one of claims 1 to 6, **characterised in that** at least one of the roller bearings (32, 34) is implemented as a spherical roller thrust bearing, as a tapered roller bearing or as a deep-groove thrust ball bearing.

9. Planet carrier arrangement (20) according to one of claims 1 to 7, **characterised in that** the traction element (14) is implemented as a solid shaft or hollow shaft.

10. Vertical mill gearbox (50), comprising a casing (53) and at least one first planetary gear stage (45) which is connected to a bevel gear stage (52), wherein a planet carrier (10) of the first planetary gear stage (45) is attached to the casing (53) via a traction element (14), **characterised in that** the planet carrier (10) is disposed on the casing (53) by means of a planet carrier arrangement (20) according to one of claims 1 to 9.

11. Vertical mill gearbox (50) according to claim 10, **characterised in that** the vertical mill gearbox (50) has a second planetary gear stage (65) which is linked to the first planetary gear stage (45) and is designed to drive a grinding table (72) of a vertical mill (70).

12. Vertical mill gearbox (50) according to claim 10 or 11, **characterised in that** a torsion shaft (55) mounted in a manner enabling it to oscillate is disposed between the bevel gear stage (52) and the first or second planetary gear stage (45, 65) for torque transmission.

13. Vertical mill (70), comprising a drive motor (60) which is connected to a vertical mill gearbox (50) for driving a grinding table (72), **characterised in that** the vertical mill gearbox (50) is implemented according to one of claims 10 or 11.

## Revendications

1. Système (20) de support de roue satellite, comprenant un support (10) de roue satellite, qui est monté suspendu à une première extrémité d'un élément (14) de traction, l'élément (14) de traction étant, à une première extrémité (16), reçu avec possibilité d'oscillation dans un montage (30), **caractérisé en ce que** le montage (30) a au moins un premier et deuxième paliers (32, 34) à roulement, l'un des paliers (32, 34) à roulement étant constitué pour absorber une force axiale soulevant le support (10) de roue satellite.

2. Système (20) de support de roue satellite suivant la revendication 1, **caractérisé en ce que** le premier et le deuxième paliers (32, 34) à roulement sont disposés suivant une disposition (42) en X.

3. Système (20) de support de roue satellite suivant la revendication 1 ou 2, **caractérisé en ce que** le centre (33, 35) de rotation des paliers (32, 34) à roulement est en un point (43) d'oscillation commun.

4. Système (20) de support de roue satellite suivant l'une des revendications 1 à 3, **caractérisé en ce que** les paliers (32, 34) à roulement sont précontraints l'un par rapport à l'autre.

5. Système (20) de support de roue satellite suivant la revendication 4, **caractérisé en ce que** les paliers (32, 34) à roulement sont précontraints au moyen d'un élément (38) de précontrainte, qui est poussé par un composant (54) du carter, notamment par un couvercle (51).

6. Système (20) de support de roue satellite suivant l'une des revendications 1 à 5, **caractérisé en ce qu'**un manchon (37) de mise à distance est disposé entre le premier et le deuxième paliers (32, 34) à roulement.

7. Système (20) de support de roue satellite suivant l'une des revendications 1 à 6, **caractérisé en ce que** les paliers (32, 34) à roulement sont reçus dans une douille (31) d'une seule pièce.

8. Système (20) de support de roue satellite suivant l'une des revendications 1 à 6, **caractérisé en ce qu'**au moins l'un des paliers (32, 34) à roulement est constitué en palier à roulement oscillant axial, en palier à roulement conique ou en palier à roulement rainuré axial.

9. Système (20) de support de roue satellite suivant l'une des revendications 1 à 7, **caractérisé en ce que** l'élément (14) de traction est constitué sous la forme d'un arbre plein ou d'un arbre creux.

10. Engrenage (50) de broyeur vertical, comprenant un carter (53) et au moins un premier étage (45) satellite, qui est relié à un étage (52) à roue conique, un support (10) de roue satellite du premier étage (45) satellite étant fixé au carter (53) par un élément (14) de traction, **caractérisé en ce que** le support (10) de roue satellite est monté sur le carter (53), au moyen d'un système (20) de roue satellite suivant l'une des revendications 1 à 9.

11. Engrenage (50) de broyeur vertical suivant la revendication 10, **caractérisé en ce que** l'engrenage (50) de broyeur vertical a un deuxième étage (65) satellite, qui est accouplé au premier étage (45) satellite et qui est constitué pour l'entraînement du disque (72) de broyeur d'un broyeur (70) vertical.

12. Engrenage (50) de broyeur vertical suivant la revendication 10 ou 11, **caractérisé en ce qu'**un arbre (55) de torsion monté avec possibilité d'osciller est, pour la transmission du couple, disposé entre l'étage (52) à roue conique et le premier ou le deuxième étage (45, 65) satellite.

13. Broyeur (70) vertical, comprenant un moteur (60) d'entraînement, qui, pour l'entraînement d'un disque (72) de broyage, est relié à un engrenage (50) de broyeur vertical, **caractérisé en ce que** l'engrenage (50) de broyeur vertical est constitué suivant l'une des revendications 10 ou 11.
